# EUROPEAN PATENT APPLICATION

(11) **EP 2 999 022 A1**
(43) Date of publication of application: **23.03.2016**
(21) Application number: 13884788.4
(22) Date of filing: 05.11.2013
(51) Int. Cl.: H01M 2/02

(54) **ALUMINUM POUCH FILM FOR SECONDARY BATTERY, PACKAGING MATERIAL COMPRISING SAME, SECONDARY BATTERY COMPRISING SAME, AND MANUFACTURING METHOD THEREFOR**

(30) Priority: 13.05.2013 KR 20130054015; 13.05.2013 KR 20130054016; 13.05.2013 KR 20130054017
(71) Applicant: Heesung Chemical Ltd., Bugi-myeon, Cheongwon-gu, Cheongju-si Chungcheongbuk-do 28139 (KR)
(72) Inventor: GU, Chang-Il, Gyeonggi-do 415-778 (KR); LEE, Soon-Sik, Chungcheongbuk-do 28492 (KR); LEE, Ju-Hyung, Chungcheongbuk-do 28390 (KR)
(74) Representative: Regimbeau
(86) International application number: PCT/KR2013/009962
(87) International publication number: WO 2014/185605

(57) **Abstract**

This invention relates to an aluminum pouch film for a secondary battery and a manufacturing method thereof, the aluminum pouch film including: an aluminum layer; an outer resin layer formed on the first surface of the aluminum layer; a first adhesive layer for adhering the aluminum layer to the outer resin layer; an inner resin layer formed on the second surface of the aluminum layer; and a second adhesive layer for adhering the aluminum layer to the inner resin layer.

## Description

### Technical Field

The present invention relates to an aluminum pouch film for a secondary battery and a manufacturing method thereof, and more particularly, to the manufacture of an aluminum pouch film for a secondary battery, which is maintained in insulation properties and electrolyte resistance despite the omission of aluminum surface treatment in a conventional manufacturing process, compared to a conventional pouch film for a secondary battery.

### Background Art

Secondary batteries are typically referred to as lithium secondary batteries, and are employed in potable terminal devices such as notebook computers, smart phones, tablet PCs and video cameras, electric vehicles including hybrid vehicles, and smart grids for energy storage. Thorough research is ongoing into secondary batteries that are small, light and slim and may be resistant to various environmental conditions including severe thermal conditions and mechanical impacts. For a packaging material used in such lithium batteries, a pouch for a secondary battery, which is an exterior material having a multilayer structure (e.g. an inner resin layer, an aluminum layer, and an outer resin layer), is advantageously utilized because it may be freely manipulated depending on the shape of the battery, unlike a conventional can type packaging material. A typically available pouch film for a secondary battery is provided in the form of a multilayer structure configured to sequentially form an inner resin layer comprising an adhesive layer having thermal adhesion to thus function as a sealing agent, including polyolefin such as polyethylene (PE), casted polypropylene (cPP) or polypropylene (PP), or copolymers thereof; an aluminum layer comprising a metal foil layer that functions as a substrate responsible for maintaining mechanical strength and as a moisture and oxygen barrier layer; and an outer resin layer comprising a functional polymer film, including a polyethylene terephthalate (PET) resin, polyethylene naphthalate (PEN), a nylon resin or a liquid crystal polymer (LCP), to protect the battery cell from external impact.

A pouch type secondary battery is advantageous because its shape is variable, and it may realize a secondary battery of the same capacity even when having a smaller volume and mass. Unlike the can type, however, the pouch type may be damaged due to a variety of reasons in diverse processes because a soft pouch is used as a container. For example, in the course of placing an electrode assembly in the pouch, the PP or cPP layer in the pouch may be cracked by a protrusion such as an electrode tap or an electrode lead, and the aluminum layer may be exposed due to such cracking. In this case, side-reactions may occur attributable to the reactivity with an electrolyte. The aluminum layer exposed to the electrolyte may cause a chemical reaction with oxygen or moisture and the electrolyte penetrated or diffused into the battery, thus causing corrosion and the generation of corrosive gas, undesirably resulting in a swelling problem that expands the inside of the battery. More specifically, corrosive gas such as hydrofluoric acid (HF) may arise from the reaction of LiPF₆ with water and oxygen. Such hydrofluoric acid may react with aluminum to cause a rapid exothermic reaction, and may be adsorbed to the surface of aluminum through a secondary reaction thus infiltrating the structure, whereby brittleness of the structure is increased, and ultimately cracking of the pouch film may occur even by fine impact. Accordingly, lithium may react with the atmosphere attributable to leakage of the electrolyte, resulting in an outbreak of fire. Hence, in order to prevent the corrosive hydrofluoric acid thus produced from coming into contact with aluminum, various aluminum surface modification techniques are under study.

A conventional aluminum surface modification method is known to be a chemical conversion treatment method of an aluminum foil as disclosed in Korean Patent Application Publication No. 10-2001-7010231. An example of chemical conversion treatment includes chromate treatment. In particular, there are a variety of chromate treatment methods using a coating process or an immersion process. Such chromate treatment is carried out using a material composed mainly of hexavalent chromium having good functionality, but chromium is one of four heavy metals having disposal and removal problems for environmental preservation, together with Cd, Pb and Hg, determined to be a toxic environmental pollutant harmful to human bodies and other living bodies, and is thus regarded as undesirable. In complying with stringent global regulations on the use of hexavalent chromium, costs for the preparation, use, treatment and disposal thereof are continuously increasing, and thus research and development is ongoing into alternative materials and processes thereto. Based on the results of research and development, chromate treatment using trivalent chromium, which is relatively safe to living bodies compared to hexavalent chromium, is generally being carried out. However, it is difficult to obtain the functionality equivalent to that of hexavalent chromium, and also, chromate treatment using chromium as a heavy metal is still undesirable from an environmental view. Also, since an agent for use in chemical conversion treatment frequently causes the corrosion of a coating machine, the use of the coating machine is limited, and also the working environment may become worse. Furthermore, in order to enhance adhesion of the above agent, acid or alkali immersion treatment, degreasing, and etching have to be implemented during the manufacturing process, undesirably incurring high processing costs and remarkably lowering the processing rate in the manufacture of a packaging material for a battery. Hence, there are needs for methods able to maintain the performance of a packaging material for a secondary battery while omitting the aluminum surface treatment process.

### Disclosure

### Technical Problem

The present invention has been made keeping in mind the aforementioned problems, and an object of the present invention is to provide a method of manufacturing an aluminum pouch film for a secondary battery, wherein aluminum surface treatment may be omitted in the aluminum pouch manufacturing process to thus exhibit environmentally friendly and economic benefits, and also, even when the battery is exposed to physical or chemical impact or electrical stress, cracking of the adhesive layer in the pouch may be suppressed, and superior moldability, insulation properties and electrolyte resistance may be manifested.

### Technical Solution

In order to accomplish the above object, the present invention provides an aluminum pouch film for a secondary battery, comprising: an aluminum layer; an outer resin layer formed on the first surface of the aluminum layer; a first adhesive layer for adhering the aluminum layer to the outer resin layer; an inner resin layer formed on the second surface of the aluminum layer; and a second adhesive layer for adhering the aluminum layer to the inner resin layer.

In addition, the present invention provides a method of manufacturing an aluminum pouch film for a secondary battery, comprising: a) preparing an aluminum layer; b) forming an outer resin layer on the first surface of the aluminum layer; c) preparing an inner resin layer; and d) adhering the inner resin layer to the second surface of the aluminum layer, wherein adhering the inner resin layer is performed using an adhesive comprising a monomer, one side of which is modified with a silicate group or a phosphate group to form the end of a chain.

In addition, the present invention provides a method of manufacturing an aluminum pouch film for a secondary battery, comprising: a) preparing an aluminum layer; b) forming an outer resin layer on the first surface of the aluminum layer; c) forming a copolymer layer on the second surface of the aluminum layer; and d) forming an inner resin layer on the copolymer layer.

In addition, the present invention provides a packaging material, comprising the aluminum pouch film as above.

In addition, the present invention provides a secondary battery, comprising the aluminum pouch film as above.

### Advantageous Effects

According to the present invention, even when an aluminum pouch film for a secondary battery is exposed to physical or chemical impact or electrical stress, cracking of the adhesive layer in the pouch can be suppressed, thus preventing delamination. Furthermore, the aluminum layer can be prevented from chemically reacting with the electrolyte, thus reducing the risk of explosion at high temperatures or expansion of the inside of the battery due to the generation of gas in the battery. Moreover, the aluminum foil can be laminated on the film without chemical surface treatment thereof, by applying an adhesive partially containing a specific monomer, the monomer component of which is modified, and thereby an aluminum surface treatment process, which needs a very long period of time in the course of aluminum pouch production, can be omitted, ultimately achieving environmentally friendly and economic benefits.

### Description of Drawings

FIG. 1 illustrates the structure of an aluminum pouch film for a secondary battery according to an embodiment of the present invention;
FIG. 2 illustrates the structure of an aluminum pouch film for a secondary battery according to another embodiment of the present invention; and
FIG. 3 schematically illustrates a mechanism according to a preferred embodiment of the present invention.

### Best Mode

Hereinafter, a detailed description will be given of preferred embodiments of the present invention with reference to the appended drawings.

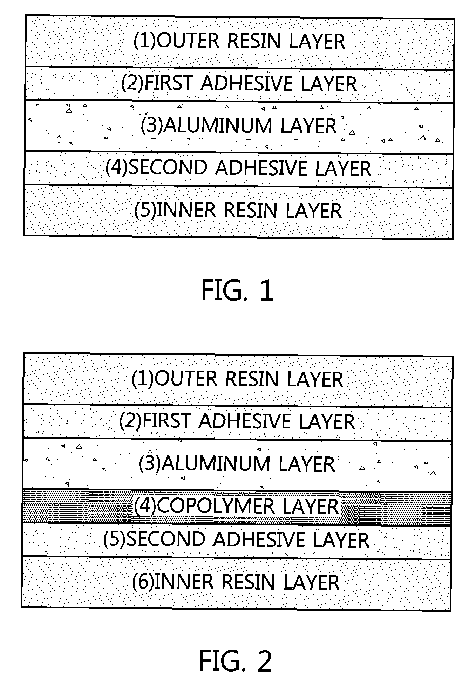

According to a preferred embodiment of the present invention, as illustrated in FIG. 1, an aluminum pouch film for a secondary battery comprises an aluminum layer 3, an outer resin layer 1 formed on the first surface of the aluminum layer, a first adhesive layer 2 for adhering the aluminum layer to the outer resin layer, an inner resin layer 5 formed on the second surface of the aluminum layer, and a second adhesive layer 4 for adhering the aluminum layer to the inner resin layer. As such, a strong bond is formed with a SiO₂ group or a phosphate group of the adhesive layer between the aluminum layer and the second adhesive layer 4.

According to another preferred embodiment of the present invention, as illustrated in FIG. 2, an aluminum pouch film for a secondary battery comprises an aluminum layer 3, an outer resin layer 1 formed on the first surface of the aluminum layer, a first adhesive layer 2 for adhering the aluminum layer to the outer resin layer, a copolymer layer 4 formed on the second surface of the aluminum layer, an inner resin layer 6 disposed at the innermost position of the film, and a second adhesive layer 5 for adhering the copolymer layer to the inner resin layer. As such, a strong bond is formed with a phosphate group between the aluminum layer and the copolymer layer 4.

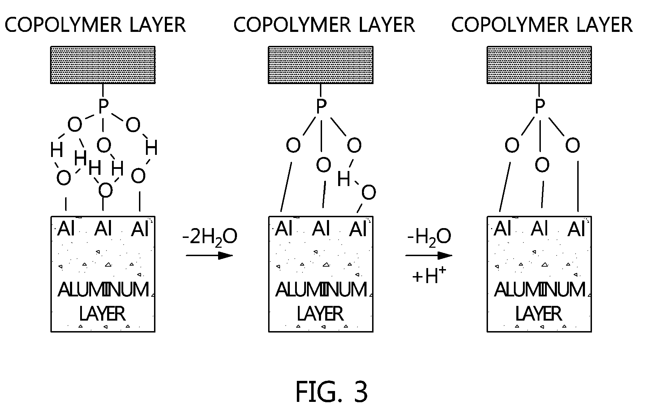

As illustrated in FIG. 3, the mechanism between the phosphate group and the aluminum layer is as follows: an initial bond is formed by hydrogen bonding between the phosphate and aluminum oxide on the surface of the aluminum layer, and water (H₂O) escapes therefrom when applying heat thereto, ultimately resulting in a strong bond of R-P-O-Al. Furthermore, since a hydroxyl group is provided between the copolymer layer and the inner resin layer, it is responsible for forming a strong bond with a polyurethane-based adhesive.

Below is a description of respective layers of the aluminum pouch film for a secondary battery according to the present invention.

### Aluminum layer

In the aluminum pouch film for a secondary battery according to the present invention, the aluminum layer 3 preferably includes a soft aluminum foil, and more preferably an iron-containing aluminum foil to ensure high moldability of the aluminum foil. As for the iron-containing aluminum foil, iron is used in an amount of preferably 0.1 to 9.0 mass%, and more preferably 0.5 to 2.0 mass%, based on 100 mass% of the aluminum foil. If the iron content of the aluminum foil is less than 0.1 mass%, ductility of the aluminum layer may decrease. In contrast, if the iron content thereof exceeds 9.0 mass%, moldability may decrease. Etching or degreasing may be performed on the surface of the aluminum foil used in the aluminum layer in order to enhance adhesion thereof to the inner resin layer, but may be omitted to achieve a fast processing rate. The thickness of the aluminum layer is preferably set to the range of 10 to 100 µm, and more preferably 30 to 50 µm, taking into consideration processability, and oxygen and moisture barrier properties. If the thickness thereof is less than 10 µm, the resulting layer may be easily torn, and electrolyte resistance and insulation properties may deteriorate. In contrast, if the thickness thereof exceeds 100 µm, poor moldability may result.

### Outer resin layer

In the aluminum pouch film for a secondary battery according to the present invention, the outer resin layer 1 corresponds to a portion that comes into direct contact with hardware, and thus it is preferably made of an insulating resin. The resin for use in the outer resin layer may include a polyester resin such as polyethylene terephthalate, polybutylene terephthalate, polyethylene naphthalate, polybutylene naphthalate, copolyester or polycarbonate, or a nylon film. Particularly useful is a nylon film. The nylon film has excellent rupture strength, pinhole resistance, and gas barrier properties, and is also superior in heat resistance, cold resistance and mechanical strength, and is thus mainly utilized as a packaging film. Specific examples of the nylon film may include polyamide resin such as Nylon 6, Nylon 66, a copolymer of Nylon 6 and Nylon 66, Nylon 610, and poly(m-xylene adipamide) (MXD6). When the outer resin layer is stacked, the thickness of the stacked outer resin layer preferably falls in the range of 10 to 30 µm, and particularly 12 to 25 µm. If the thickness thereof is less than 10 µm, physical properties may deteriorate and the resulting layer may be easily torn. In contrast, if the thickness thereof exceeds 30 µm, moldability may decrease.

### First adhesive layer

In the aluminum pouch film for a secondary battery according to the present invention, the first adhesive layer is made of a polyurethane-based adhesive composed mainly of a polyol component and further comprising an isocyanate compound or a derivative thereof as a curing agent component. The first adhesive layer preferably has a thickness of 2 to 10 µm, and more preferably 3 to 5 µm, taking account of adhesion to the outer resin layer and the thickness after a molding process. If the thickness thereof is less than 2 µm, adhesion may decrease. In contrast, if the thickness thereof exceeds 10 µm, cracking may occur.

### Inner resin layer

In the aluminum pouch film for a secondary battery according to the present invention, the inner resin layer may include polyolefin such as polyethylene (PE) or polypropylene (PP), or copolymers thereof. When the polymer layer is formed of polyolefin such as PE or PP or copolymers thereof, properties such as good heat sealing capability, moisture resistance or heat resistance, required of a packaging material for a secondary battery, may be exhibited, and good lamination processability may be obtained. The thickness of the polymer layer of the inner resin layer is preferably set to the range of 20 to 60 µm and more preferably 30 to 50 µm in consideration of moldability, insulation properties and electrolyte resistance. When the thickness thereof falls out of the above range, moldability, insulation properties and electrolyte resistance may deteriorate.

### Second adhesive layer

In the aluminum pouch film for a secondary battery according to the present invention, the second adhesive layer may include an adhesive comprising a monomer component, one side of which is modified with a silicate group or a phosphate group to form the end of a chain, and additionally comprising any one or more of polyester-, polyether-, polyurethane-, polyesterurethane-, polyolefin-, polyethyleneimine-, cyanoacrylate-, isocyanate-, imide-, silicone-based resins or modified products thereof, and mixtures thereof. When the second adhesive layer according to the present invention, which includes a monomer component, one side of which is modified with a silicate group or a phosphate group to form the end of the chain, comes into contact with the aluminum foil layer, a strong bond is formed between the aluminum foil layer and SiO₂ of the silicate group or PO₄²⁻ of the phosphate group, through copolymerization.

Compared to conventional adhesives, adhesion is further enhanced, and the silicate or phosphate adhesive layer is responsible for chemical surface treatment of aluminum, thus suppressing the penetration of the electrolyte to thereby improve electrolyte resistance. Therefore, since the aluminum pouch film for a secondary battery according to the present invention includes an adhesive comprising a monomer, one side of which is modified with a silicate group or a phosphate group to form the end of the chain, electrolyte resistance and adhesion do not decrease even when aluminum surface treatment is omitted. The monomer, one side of which is modified with a silicate group or a phosphate group to form the end of the chain, is preferably used in an amount of 5 to 50 mass%, and more preferably, 10 to 30 mass%, based on the total amount of the monomer component. If the amount of the monomer is less than 10 mass%, adhesion may decrease. In contrast, if the amount thereof exceeds 50 mass%, formation of the polymer chain may become problematic and thus curing does not proceed. Taking into consideration the adhesion to the inner resin layer and the thickness after a molding process, the second adhesive layer has a thickness of preferably 2 to 30 µm, and more preferably 3 to 15 µm. If the thickness of the second adhesive layer is less than 2 µm, adhesion may decrease. In contrast, if the thickness thereof exceeds 30 µm, flexibility of the film may decrease. Stacking of the inner resin layer and the aluminum layer on the second adhesive layer is not particularly limited, but is preferably performed using a dry lamination process or an extrusion lamination process.

### Copolymer layer

In the aluminum pouch film for a secondary battery according to the present invention, the copolymer layer may include a copolymer comprising a monomer, one side of which is formed with a hydroxyl group and the other side of which is formed with a phosphate group. Preferably useful is a copolymer of any one or more of VPA (Vinyl Phosphonic Acid) and AA (Acrylic Acid). When the above monomer is used, a strong bond is formed between the aluminum foil layer and PO₄²⁻ of the phosphate group and a hydrophilic hydroxyl group enables the formation of a strong bond to the inner resin layer via the adhesive, thus further enhancing adhesion, compared to a chromate treatment process as a conventional aluminum surface treatment process. Also, the copolymer layer is formed from the monomer, thus improving water resistance and suppressing the penetration of the electrolyte, resulting in increased electrolyte resistance. Hence, since the aluminum pouch film for a secondary battery according to the present invention includes the copolymer layer, electrolyte resistance and adhesion do not decrease, despite the omission of conventional aluminum chromate surface treatment. Taking into consideration the adhesion to the inner resin layer and the thickness after a molding process, the copolymer layer preferably has a thickness of 2 to 30 µm, and more preferably 3 to 10 µm. If the thickness of the copolymer layer is less than 2 µm, adhesion and electrolyte resistance may decrease. In contrast, if the thickness thereof exceeds 30 µm, flexibility of the film may decrease.

In addition, the present invention addresses a method of manufacturing the aluminum pouch film, comprising: a) preparing an aluminum layer; b) forming an outer resin layer on the first surface of the aluminum layer; c) preparing an inner resin layer including a cross-linked polymer layer; and d) adhering the inner resin layer to the second surface of the aluminum layer, wherein adhering the inner resin layer is performed by using an adhesive comprising a monomer, one side of which is modified with a silicate group to form the end of a chain.

In addition, the present invention addresses a packaging material, comprising the aluminum pouch film for a secondary battery.

In addition, the present invention addresses a secondary battery, comprising the aluminum pouch film for a secondary battery.

Specific examples of the aluminum pouch film for a secondary battery are described below.

### Mode for Invention

### Examples 1 to 3 and Comparative Examples 1 to 6: Manufacture of aluminum pouch film

An aluminum pouch film for a secondary battery according to the present invention is specified through the following examples.

### [Example 1]

A 40 µm thick aluminum foil (made by Dong-il Aluminum) was slit to an area of 30 cm X 20 cm, and then washed with water, thus removing dust from the surface thereof.

Subsequently, an outer resin layer was stacked on the first surface of the aluminum foil in such a manner that a 4 µm thick polyurethane adhesive resin (made by Hi-Chem) was applied, and 25 µm thick Nylon 6 (made by Hyosung) was formed on the aluminum layer by dry lamination and then aged at 40°C for 7 days.

Subsequently, an inner resin layer was stacked on the second surface of the aluminum foil in such a manner that an adhesive comprising polyurethane (made by Mitsui) as a main component and a monomer (made by Rhodia) in which one chain of polyol was modified with SiO₂, mixed at a weight ratio of 70:30, was applied to a thickness of 4 µm, and 40 µm thick polypropylene (made by Okamoto) was formed on the aluminum layer by dry lamination and then aged at 40°C for 5 days.

### [Example 2]

A 40 µm thick aluminum foil (made by Dong-il Aluminum) was slit to an area of 30 cm X 20 cm, and then washed with water, thus removing dust from the surface thereof.

Subsequently, a copolymer layer was stacked on the second surface of the aluminum foil in such a manner that a mixture comprising VPA (Vinyl Phosphonic Acid) (made by Rhodia) and AA (Acrylic Acid) at 5:1 was applied to a thickness of 5 µm and then thermally treated at 120°C for 3 days.

Subsequently, an outer resin layer was stacked on the first surface of the aluminum foil in such a manner that a 4 µm thick polyurethane adhesive resin (made by Hi-Chem) was applied, and 25 µm thick Nylon 6 (made by Hyosung) was formed on the aluminum layer by dry lamination and then aged at 40°C for 7 days.

Subsequently, an inner resin layer was stacked on the second surface of the aluminum foil having the copolymer layer in such a manner that a polyurethane adhesive (made by Mitsui) was applied to a thickness of 4 µm, and 40 µm thick polypropylene (made by Okamoto) was formed on the aluminum layer by dry lamination and then aged at 40°C for 5 days.

### [Example 3]

A 40 µm thick aluminum foil (made by Dong-il Aluminum) was slit to an area of 30 cm X 20 cm, and then washed with water, thus removing dust from the surface thereof

Subsequently, an outer resin layer was stacked on the first surface of the aluminum foil in such a manner that a 4 µm thick polyurethane adhesive resin (made by Hi-Chem) was applied, and 25 µm thick Nylon 6 (made by Hyosung) was formed on the aluminum layer by dry lamination and then aged at 40°C for 7 days.

Subsequently, an inner resin layer was stacked on the second surface of the aluminum foil in such a manner that an adhesive comprising polyurethane (made by Mitsui) as a main component and a monomer (made by Rhodia) in which one chain of polyol was modified with a phosphate group, mixed at a weight ratio of 70:30, was applied to a thickness of 4 µm, and 40 µm thick polypropylene (made by Okamoto) was formed on the aluminum layer by dry lamination and then aged at 40°C for 5 days.

### [Comparative Example 1]

A 40 µm thick aluminum foil (made by Dong-il Aluminum) was slit to an area of 30 cm X 20 cm, and then washed with water, thus removing dust from the surface thereof.

Subsequently, an outer resin layer was stacked on the first surface of the aluminum foil in such a manner that a 4 µm thick polyurethane adhesive resin (made by Hi-Chem) was applied, and 25 µm thick Nylon 6 (made by Hyosung) was formed by dry lamination on the aluminum layer and then aged at 40°C for 7 days.

Subsequently, an inner resin layer was stacked on the second surface of the aluminum foil in such a manner that an adhesive composed exclusively of polyurethane (made by Mitsui), compared to Example 1, was applied to a thickness of 4 µm, and 40 µm thick polypropylene (made by Okamoto) was formed by dry lamination on the aluminum layer and then aged at 40°C for 5 days.

### [Comparative Example 2]

A 40 µm thick aluminum foil (made by Dong-il Aluminum) was slit to an area of 30 cm X 20 cm, and then washed with water, thus removing dust from the surface thereof. Thereafter, the water-washed aluminum foil was immersed in a 5% sulfuric acid solution to undergo acid degreasing, and then immersed in a 5% sodium hydroxide solution and thus surface-activated. Thereafter, the aluminum foil was immersed in an immersion solution containing a trivalent chromium film forming agent (made by Atotech) so that chemical conversion treatment was performed for 5 min.

Subsequently, an outer resin layer was stacked on the first surface of the aluminum foil in such a manner that a 4 µm thick polyurethane adhesive resin (made by Hi-Chem) was applied, and 25 µm thick Nylon 6 (made by Hyosung) was formed by dry lamination on the aluminum layer and then aged at 40°C for 7 days.

Subsequently, an inner resin layer was stacked on the second surface of the aluminum foil in such a manner that an adhesive composed exclusively of polyurethane (made by Mitsui), compared to Example 1, was applied to a thickness of 4 µm, and 40 µm thick polypropylene (made by Okamoto) was formed by dry lamination on the aluminum layer and then aged at 40°C for 5 days.

### [Comparative Example 3]

A 40 µm thick aluminum foil (made by Dong-il Aluminum) was slit to an area of 30 cm X 20 cm, and then washed with water, thus removing dust from the surface thereof.

Subsequently, an outer resin layer was stacked on the first surface of the aluminum foil in such a manner that a 4 µm thick polyurethane adhesive resin (made by Hi-Chem) was applied, and 25 µm thick Nylon 6 (made by Hyosung) was formed by dry lamination on the aluminum layer and then aged at 40°C for 7 days.

Subsequently, an inner resin layer was stacked on the second surface of the aluminum foil in such a manner that a polyurethane adhesive (made by Mitsui) was applied to a thickness of 4 µm, and 40 µm thick polypropylene (made by Okamoto) was formed by dry lamination on the aluminum layer and then aged at 40°C for 5 days.

### [Comparative Example 4]

A 40 µm thick aluminum foil (made by Dong-il Aluminum) was slit to an area of 30 cm X 20 cm, and then washed with water, thus removing dust from the surface thereof. Thereafter, the water-washed aluminum foil was immersed in a 5% sulfuric acid solution to undergo acid degreasing, and then immersed in a 5% sodium hydroxide solution and thus surface-activated. Thereafter, the aluminum foil was immersed in an immersion solution containing a trivalent chromium film forming agent (made by Atotech) so that chemical conversion treatment was performed for 5 min.

Subsequently, an outer resin layer was stacked on the first surface of the aluminum foil in such a manner that a 4 µm thick polyurethane adhesive resin (made by Hi-Chem) was applied, and 25 µm thick Nylon 6 (made by Hyosung) was formed by dry lamination on the aluminum layer and then aged at 40°C for 7 days.

Subsequently, an inner resin layer was stacked on the second surface of the aluminum foil in such a manner that an adhesive composed exclusively of polyurethane (made by Mitsui), compared to Example 1, was applied to a thickness of 4 µm, and 40 µm thick polypropylene (made by Okamoto) was formed by dry lamination on the aluminum layer and then aged at 40°C for 5 days.

### [Comparative Example 5]

A 40 µm thick aluminum foil (made by Dong-il Aluminum) was slit to an area of 30 cm X 20 cm, and then washed with water, thus removing dust from the surface thereof.

Subsequently, an outer resin layer was stacked on the first surface of the aluminum foil in such a manner that a 4 µm thick polyurethane adhesive resin (made by Hi-Chem) was applied, and 25 µm thick Nylon 6 (made by Hyosung) was formed by dry lamination on the aluminum layer and then aged at 40°C for 7 days.

Subsequently, an inner resin layer was stacked on the second surface of the aluminum foil in such a manner that an adhesive composed exclusively of polyurethane (made by Mitsui), compared to Example 1, was applied to a thickness of 4 µm, and 40 µm thick polypropylene (made by Okamoto) was formed by dry lamination on the aluminum layer and then aged at 40°C for 5 days.

### [Comparative Example 6]

A 40 µm thick aluminum foil (made by Dong-il Aluminum) was slit to an area of 30 cm X 20 cm, and then washed with water, thus removing dust from the surface thereof. Thereafter, the water-washed aluminum foil was immersed in a 5% sulfuric acid solution to undergo acid degreasing, and then immersed in a 5% sodium hydroxide solution and thus surface-activated. Thereafter, the aluminum foil was immersed in an immersion solution containing a trivalent chromium film forming agent (made by Atotech) so that chemical conversion treatment was performed for 5 min.

Subsequently, an outer resin layer was stacked on the first surface of the aluminum foil in such a manner that a 4 µm thick polyurethane adhesive resin (made by Hi-Chem) was applied, and 25 µm thick Nylon 6 (made by Hyosung) was formed by dry lamination on the aluminum layer and then aged at 40°C for 7 days.

Subsequently, an inner resin layer was stacked on the second surface of the aluminum foil in such a manner that an adhesive composed exclusively of polyurethane (made by Mitsui), compared to Example 1, was applied to a thickness of 4 µm, and 40 µm thick polypropylene (made by Okamoto) was formed by dry lamination on the aluminum layer and then aged at 40°C for 5 days.

### Evaluation of electrolyte resistance

Specimens obtained by cutting the aluminum pouch film of each of Examples 1 to 3 and Comparative Examples 1 to 6 to a size of 2 cm × 4 cm were placed together with an LiPF₆ electrolyte (made by Leechem) in a testing reactor, sealed and then heated to 85°C. Individual films were observed with the naked eye for film separation at intervals of 4 hr for 24 hr to evaluate electrolyte resistance.

**[Table 1]**

| | 4 hr | 8 hr | 12 hr | 16 hr | 20 hr | 24 hr |
|---|---|---|---|---|---|---|
| Ex. 1 | ○ | ○ | ○ | ○ | ○ | ○ |
| Ex. 2 | ○ | ○ | ○ | ○ | ○ | ○ |
| Ex. 3 | ○ | ○ | ○ | ○ | ○ | ○ |
| Comp.Ex. 1 | ○ | Δ | Δ | × | × | × |
| Comp.Ex. 2 | ○ | ○ | ○ | ○ | ○ | ○ |
| Comp.Ex. 3 | ○ | Δ | Δ | × | × | × |
| Comp.Ex. 4 | ○ | ○ | ○ | ○ | ○ | ○ |
| Comp.Ex. 5 | ○ | Δ | Δ | × | × | × |
| Comp.Ex. 6 | ○ | ○ | ○ | ○ | ○ | ○ |

| | | | | | | |
|---|---|---|---|---|---|---|
| ○: No separation Δ: Partial separation ×: Separation | | | | | | |

As is apparent from Table 1, Examples 1 to 3 did not exhibit film separation, compared to Comparative Examples 1, 3, and 5 using the adhesive composed exclusively of polyurethane, and also did not cause film separation as in Comparative Examples 2, 4, and 6 in which additional chemical conversion treatment was performed.

### Evaluation of insulation properties

Each of the aluminum pouch films of Examples 1 and 3 and Comparative Examples 1, 2, 5, and 6 was molded to 3 cm × 5 cm × 0.62 cm (width × length × thickness), filled with an electrode assembly comprising a cathode, a separator and an anode, and an LiPF₆ electrolyte (made by Leechem), sealed and stored at 85°C for 24 hr, after which the electrode and the upper aluminum layer were intentionally exposed, and whether they were electrically insulated (1 MΩ or more) was measured.

**[Table 2]**

| | Evaluation of Insulation |
|---|---|
| Ex. 1 | ≥ 1 MΩ |
| Ex. 3 | ≥ 1 MΩ |
| Comp.Ex. 1 | < 1 MΩ |
| Comp.Ex. 2 | ≥ 1 MΩ |
| Comp.Ex. 5 | < 1 MΩ |
| Comp.Ex. 6 | ≥ 1 MΩ |

As is apparent from Table 2, Examples 1 and 3 exhibited high insulation properties, compared to Comparative Examples 1 and 5 using the adhesive composed exclusively of polyurethane, and had insulation properties equivalent to Comparative Examples 2 and 6 in which additional chemical conversion treatment was performed.

### Evaluation of adhesion

Each of the aluminum pouch films of Example 2 and Comparative Examples 3 and 4 was molded to 20 cm × 1.5 cm (width × length), and thus the adhesive strength between the inner resin layer and the aluminum layer was measured using a Texture Analyzer made by Stable Micro Systems.

**[Table 3]**

| | Adhesion |
|---|---|
| Ex. 2 | ⊚ |
| Comp.Ex. 3 | Δ |
| Comp.Ex. 4 | ○ |

| | |
|---|---|
| ⊚: 12 ∼ 15 N ○: 8 ∼ 11 N Δ: 4 ∼ 7 N | |

As is apparent from Table 3, Example 2 exhibited high adhesion compared to Comparative Example 3 having no copolymer layer, and also manifested superior adhesion compared to Comparative Example 4 in which additional chemical conversion treatment was performed.

## Claims

1. An aluminum pouch film for a secondary battery, comprising:
an aluminum layer;
an outer resin layer formed on a first surface of the aluminum layer;
a first adhesive layer for adhering the aluminum layer to the outer resin layer;
an inner resin layer formed on a second surface of the aluminum layer; and
a second adhesive layer for adhering the aluminum layer to the inner resin layer.

2. The aluminum pouch film of claim 1, further comprising a copolymer layer formed between the aluminum layer and the second adhesive layer.

3. The aluminum pouch film of claim 1, wherein the second adhesive layer comprises a monomer, one side of which is modified with a silicate group to form an end of a chain.

4. The aluminum pouch film of claim 1, wherein the second adhesive layer comprises a monomer, one side of which is modified with a phosphate group to form an end of a chain.

5. The aluminum pouch film of claim 2, wherein the copolymer layer comprises a monomer, one side of which is modified with a phosphate group.

6. The aluminum pouch film of claim 5, wherein the other side of the monomer is modified with a hydroxyl group.

7. The aluminum pouch film of claim 5, wherein the monomer includes any one or more of VPA (Vinyl Phosphonic Acid) and AA (Acrylic Acid).

8. The aluminum pouch film of claim 3 or 4, wherein the monomer is used in an amount of 10 to 30 mass% based on a total amount of the second adhesive layer.

9. The aluminum pouch film of claim 1, wherein the second adhesive layer includes any one or more of polyester-, polyether-, polyurethane-, polyesterurethane-, polyolefin-, polyethyleneimine-, cyanoacrylate-, isocyanate-, imide-, silicone-based resins or modified products thereof, and mixtures thereof

10. The aluminum pouch film of claim 1, wherein the outer resin layer includes any one or more selected from the group consisting of polyethylene terephthalate, polybutylene terephthalate, polyethylene naphthalate, polybutylene naphthalate, copolyester, polycarbonate, and a nylon film.

11. The aluminum pouch film of claim 10, wherein the nylon film includes any one or more selected from the group consisting of Nylon 6, Nylon 66, a copolymer of Nylon 6 and Nylon 66, Nylon 610, and poly(m-xylene adipamide) (MXD6).

12. The aluminum pouch film of claim 1, wherein the first adhesive layer comprises a polyurethane-based adhesive comprising a polyol component and further comprising an isocyanate compound or a derivative thereof as a curing agent component.

13. The aluminum pouch film of claim 1, wherein the inner resin layer comprises polyolefin or a polyolefin copolymer.

14. The aluminum pouch film of claim 13, wherein the polyolefin comprises polyethylene (PE) or polypropylene (PP).

15. A method of manufacturing an aluminum pouch film for a secondary battery, comprising:
a) preparing an aluminum layer;
b) forming an outer resin layer on a first surface of the aluminum layer;
c) preparing an inner resin layer; and
d) adhering the inner resin layer to a second surface of the aluminum layer,
wherein adhering the inner resin layer is performed using an adhesive comprising a monomer, one side of which is modified with a silicate group or a phosphate group to form an end of a chain.

16. A method of manufacturing an aluminum pouch film for a secondary battery, comprising:
a) preparing an aluminum layer;
b) forming an outer resin layer on a first surface of the aluminum layer;
c) forming a copolymer layer on a second surface of the aluminum layer; and
d) forming an inner resin layer on the copolymer layer.

17. The method of claim 16, wherein the copolymer layer comprises a monomer, one side of which is modified with a phosphate group.

18. The method of claim 17, wherein the other side of the monomer is modified with a hydroxyl group.

19. A packaging material, comprising the aluminum pouch film of claim 1.

20. A secondary battery, comprising the aluminum pouch film of claim 1.
